# EUROPÄISCHE PATENTSCHRIFT

(11) **EP 2 483 155 B1**
(45) Veröffentlichungstag und Bekanntmachung des Hinweises auf die Patenterteilung: **03.07.2013**
(21) Anmeldenummer: 10765408.9
(22) Anmeldetag: 30.09.2010
(51) Int. Cl.: F21V 15/01, F21V 31/00

(54) **BEFEUERUNGSEINHEIT ZUR FLUGFELDBEFEUERUNG**
LIGHTING UNIT FOR AN AIRFIELD BEACON SYSTEM
UNITE DE BALISAGE POUR UN SYSTEME DE BALISAGE D'AEROPORT

(30) Priorität: 30.09.2009 DE 102009043534
(43) Veröffentlichungstag der Anmeldung: 08.08.2012
(73) Patentinhaber: ADB BVBA, 1930 Zaventem (BE)
(72) Erfinder: BEUKEMA, Martijn, B-1050 Brussels (BE); MOONS, Ludo, B-2200 Herentals (BE)
(74) Vertreter: Pronovem
(86) Internationale Anmeldenummer: PCT/EP2010/064564
(87) Internationale Veröffentlichungsnummer: WO 2011/039309

(56) Entgegenhaltungen:
- WO-A2-2005/011329
- DE-A1- 10 242 728
- DE-A1- 19 837 224
- DE-U1- 20 309 405
- ADB-A Siemens Company: "Taxway Centre Line, Stop Bar and Intersection Medium Intensity Inset Light", E10001-T95-A103-V1-7600 , XP002626726, Gefunden im Internet: URL:http://www.esdr.com.au/ADB_Website/Tax iwayApronLightingGuidancesigns/A03450LTSLT C.pdf [gefunden am 2011-03-07] in der Anmeldung erwähnt

## Beschreibung

Die Erfindung betrifft eine Befeuerungseinheit zur Flugfeldbefeuerung auf einem Flugplatz, insbesondere zur Signalabgabe an ein Luftfahrzeug, mit den Merkmalen des Oberbegriffs des Patentanspruchs 1.

Derartige Befeuerungseinheiten werden zur Flugfeldbefeuerung auf Flughäfen verwendet, um beispielsweise Signale an im Landeanflug befindliche oder auf einer Piste oder einem Rollweg fahrende Luftfahrzeuge, insbesondere an Flugzeuge oder Hubschrauber, abzugeben. Man unterscheidet zum Beispiel Anflug-, Start- und Landebahnfeuer sowie Rollwegefeuer. Das bei Signalabgabe von einer Befeuerungseinheit ausgesandte Licht muss dabei einer räumlichen Intensitätsverteilung genügen, die durch internationale Normen vorgegeben und von Standardisierungsorganisationen wie der ICAO, kurz für International Civil Aviation Organization, oder der FAA, kurz für Federal Aviation Administration, erlassen werden.

Aus der Produktschrift "LED - Taxiway Centre Line, Stop Bar and Intersection - Medium Intensity - Inset Light", herausgegeben von ADB - A Siemens Company, unter der Bestellnummer E10001-T95-A103-V1-7600, ist ein Unterflurfeuer für Rollwegmittellinien und Haltelinien bekannt, bei dem in einem Gehäuse aus Aluminiumlegierung optische Komponenten, wie Leuchtdioden, Kollimatoren und Prismen, sowie elektrische Komponenten, wie Kabelanschlüsse, Transformatoren und Leiterplatinen, verteilt angeordnet sind. Das Gehäuse ist nach außen hin mittels einer Labyrinthdichtung zwischen Gehäusetopf und Gehäusedeckel und mittels Prismendichtungen in den Lichtaustrittsöffnungen des Deckels gegen Wassereintritt abgedichtet. Für die unterschiedlichen Signale sind jeweils mehrerer Leuchtdioden vorgesehen, die bei Montage im Herstellerwerk manuell mit den weiteren optischen Komponenten aufeinander ausgerichtet werden müssen, um das geforderte Intensitätsprofil der Lichtabstrahlung zu erzeugen.

Die Gebrauchsmusterschrift DE 203 09 405 U1, die den nächsten Stand der Technik bildet, offenbart ein Unterflurfeuer, welches ein Gehäuse mit einem in den Untergrund eingelassenen Gehäusetopf und einem diesen von oben verschließenden Gehäusedeckel aufweist. Der Gehäusedeckel weist zwei Ausnehmungen auf, in die von oben je ein Modul aufgenommen ist, welches ein Moduloberteil und ein mit diesem abgedichtet verschraubtes Modulunterteil umfasst. In Lichtdurchtrittsöffnungen des Moduloberteils sind Prismen eingesetzt. Drei Leuchtdioden mit einer Optik sind gemeinsam auf einer Platine angebracht, die mit dem Modulunterteil verschraubt ist. Die elektrische Versorgung der Leuchtdioden erfolgt über ein Kabel, das abgedichtet durch eine Öffnung in das Modul geführt ist. Das Kabel ist mit einer Wandlereinheit verbunden, die sich innerhalb des Gehäuses befindet und an ein Versorgungskabel angeschlossen ist. Für den Zusammenbau des Unterflurfeuers sind die Module vormontiert.

Die Offenlegungsschrift DE 198 37 224 A1 offenbart eine Befeuerungseinheit zur Flugfeldbefeuerung mit Leuchtdioden als Lichtquellen, die mehrere Cluster bilden. Die Cluster sind in einer Kassette integriert, die oberhalb der Energieversorgungs- und Steuereinrichtung der Befeuerungseinheit angeordnet ist. Der Gründkörper bzw. das Gehäuse der Kassette ist ganz oder teilweise mit einem elektrisch nichtleitendem Werkstoff gefüllt, so dass innerhalb der Kassette keine Hohlräume vorhanden sind und sie inhärent wasser- und gasdicht ist.

In das Gehäuse einer Befeuerungseinheit eindringendes Wasser, etwa im Bereich des Prismas eines Unterflurfeuers, kann sowohl das elektrische als auch das optische System beschädigen. Eine Undichtigkeit der Befeuerungseinheit kann sowohl während des Betriebs durch ermüdende Bauteile oder alternde Dichtungen aufgrund von Erschütterungen oder direkte Überrollbelastungen als auch nach Wartungsarbeiten durch ein fehlerhaftes Verschließen des Gehäuses entstehen, wenn keine Dichtigkeitsprüfung erfolgt.

Bei Wartungsarbeiten, die ein Entfernen oder Austauschen eines optischen Elements erfordern, besteht die Gefahr eines fehlerhaften Zusammenbaus auch in Bezug auf die exakte Einbauposition und die gegenseitige Ausrichtung der optischen Elemente. Dies ist umso kritischer, je geringer die Anzahl an Lichtquellen für eine bestimmtes Signal der Befeuerungseinheit vorgesehen ist, da dann die normgemäß geforderte hochpräzise Intensitätsverteilung des abgestrahlten Lichts droht, nicht mehr eingehalten werden zu können.

Der Erfindung liegt daher die Aufgabe zugrunde, eine Befeuerungseinheit der eingangs genannten Art bereitzustellen, die einen geringen Montage und Wartungsaufwand erfordert und eine hohe Ausfallsicherheit aufweist.

Die Aufgabe wird erfindungsgemäß gelöst durch eine gattungsgemäße Befeuerungseinheit, welche die im Kennzeichen des Patentanspruchs 1 angegebenen Merkmale aufweist. Demnach weist die Lichtquelle wenigstens eine Leuchtdiode auf und ist mit den elektrischen und optischen Komponenten in einem gasdicht verschlossenen Kassettenmodul angeordnet. Das Kassettenmodul ist in das Außengehäuse der Befeuerungseinheit integriert. Das Außengehäuse bietet dem Kassettenmodul Schutz gegen Einwirkung äußerer Kräfte und ist ebenfalls gasdicht verschlossen, so dass die im Kassettenmodul angeordneten Komponenten doppelten Dichtigkeitsschutz genießen.

Diese Konstruktion hat als Vorteil, dass bei Schaden am Außengehäuse (z.B. ein Riss im Lichtaustrittsfenster), das Kassettenmodul intakt bleibt. Wasser oder Feuchtigkeit kann also wohl in das Außengehäuse eindringen, nicht aber in das Kassettenmodul. Da die elektrischen Komponenten zur Steuerung der Leuchtdioden im gasdichten Kassettenmodul angeordnet sind, hat der Schaden am Außengehäuse keinen nachteiligen Einfluss auf die Wirkung der Lichtquelle im Kassettenmodul, so dass das Risiko eines Ausfalls der Leuchtquelle beseitigt wird.

Die Lichtaustrittsöffnung des Außengehäuses kann ebenfalls einen Fensterbaustein aufweisen, der je nach Anwendung der Befeuerungseinheit als Prisma, Streueinheit oder auch als Glasabdeckung ohne zusätzliche optische Funktion ausgebildet ist. Dieser Fensterbaustein ist in einer Lichtaustrittsöffnung des Außengehäuses gasdicht eingesetzt.

Das Kassettenmodul weist eine Ausnehmung auf, in die ein transparentes Fensterelement zur Abstrahlung von Licht gasdicht eingesetzt ist. Das Fensterelement weist ein optisches Element zur Beeinflussung von Strahlform und/oder Abstrahlrichtung des austretenden Lichtstrahls auf. Das optische Element kann beispielsweise durch eine Kollimationseinrichtung und/oder durch eine Streueinrichtung und/oder durch eine Linseneinrichtung oder durch eine Kombination aus diesen Einrichtungen gebildet werden. Die wenigstens eine Leuchtdiode und das optische Element sind dabei zur Erzeugung einer geforderten Intensitätsverteilung des abgestrahlten Lichts zueinander positioniert und aufeinander ausgerichtet fixiert.

Der Fensterbaustein des Außengehäuses unterscheidet sich vom Fensterelement des Kassettenmoduls.

Durch die Verwendung von Leuchtdioden als Lichtquelle wird die mittlere Zeit bis zu deren ersten Ausfall im Vergleich zu traditionellen Filamentlichtquellen signifikant verlängert, was der Bereitstellung einer wartungsfreien Lichtquelle gleichkommt. Daher können Wartungsarbeiten an der Befeuerungseinheit vorgenommen werden, ohne das gasdichte Kassettenmodul öffnen zu müssen, wodurch das Risiko eines Totalausfalls der elektrischen oder optischen Komponenten der Befeuerungseinheit aufgrund von Wassereintritt beseitigt wird. Das Kassettenmodul selbst ist ebenfalls praktisch wartungsfrei. Da der Zusammenbau und die Integration der elektrischen und optischen Komponenten in das Kassettenmodul sowie dessen Abdichtung herstellerseitig erfolgt, kann eine Produkthaftung für die Dichtigkeit des Kassettenmoduls vom Hersteller übernommen werden. Die geringer werdende Anzahl an verwendeten Leuchtdioden bis hin zu nur einer einzigen Leuchtdiode erfordert eine genaue Positionierung bzgl. der anderen optischen Komponenten, was durch Spezialisten des Herstellers garantiert wird. Das Kassettenmodul ist für Befeuerungseinheiten zur unidirektionalen, bidirektionalen und auch omnidirektionalen Lichtausstrahlung verwendbar. Die Befeuerungseinheit kann dabei sowohl als Unterflur- als auch als Überflurfeuer ausgebildet sein. Das Kassettenmodul wird mittels eines Klebstoffs, insbesondere eines UVhärtenden Klebstoffs, eines Silikongummis oder eines sonstigen Dichtungselements gasdicht verschlossen.

In einer bevorzugten Ausgestaltung der erfindungsgemäßen Befeuerungseinheit weist das Kassettenmodul ein die elektrischen Komponenten aufnehmendes Modulgehäuse und einen das Modulgehäuse verschließenden Moduldeckel aufweist, welcher die Ausnehmung mit dem gasdicht eingesetzten Fensterelement umfasst. Der Moduldeckel kann beispielsweise separat gefertigt werden und umfasst eine Dichtung gegen Wassereintritt und das Fensterelement mit den optischen Elementen zur Strahlbeeinflussung, die in Bezug auf die Leuchtdioden positioniert und ausgerichtet fixiert sind.

In einer bevorzugten Ausführungsform der erfindungsgemäßen Befeuerungseinheit sind Markierungen und/oder mechanische Einbauhilfen vorgesehen, anhand der die Leuchtdioden und das Fensterelement mit dem optischen Element zueinander positionierbar und aufeinander ausrichtbar fixierbar sind. Beispielsweise weist das Fensterelement Markierungen auf, die ein optimal ausgerichtetes Zusammenfügen mit der Leiterplatine der Leuchtdioden ermöglichen. Hierbei wird fast das oben beschriebene, durch eine aktive Ausrichtung mögliche Optimum der Intensitätsverteilung erreicht. Dies wird vorzugsweise bei der Verwirklichung mehrerer Signale je Fensterelement angewendet.

In einer vorteilhaften Ausgestaltung der erfindungsgemäßen Befeuerungseinheit sind das Modulgehäuse und/oder der Moduldeckel und/oder eine äußere Hülle des Kassettenmoduls thermisch hochleitfähig ausgebildet. Hierdurch kann die von den Leuchtdioden und anderen elektrischen Komponenten erzeugte Wärme gut an die Umgebung abgeführt werden. Dies ist von Vorteil, weil die Leistungsfähigkeit und Lebensdauer der Leuchtdioden umso größer ist, je geringer die Betriebstemperatur gehalten wird.

Vorzugsweise sind das Fensterelement und der Moduldeckel des Kassettenmoduls der erfindungsgemäßen Befeuerungseinheit einstückig und transparent ausgebildet. Beispielsweise kann dieses einstückige Bauteil aus Polycarbonat gefertigt sein. Hierdurch kann mit Vorteil die Anzahl an Bauteilen für eine erfindungsgemäße Befeuerungseinheit gering gehalten werden. Außerdem wird eine separates Verbinden und Abdichten von Fensterelement und Moduldeckel vermieden.

In einer weiteren vorteilhaften Ausführungsform der erfindungsgemäßen Befeuerungseinheit ist die Lichtquelle zur Erzeugung von Licht für unterschiedliche Signale ausgebildet, wobei jedem Signal wenige oder nur eine einzige Leuchtdiode zugeordnet sind bzw. ist. Als Leuchtdioden kommen vorzugsweise Hochleistungsleuchtdioden in Betracht, die von elektrischen Strömen einer Stärke von 0,1 A bis mindestens 3,0 A durchflossen werden, einen Wärmewiderstand von zum Beispiel mindestens 8 K/W aufweisen und einen Lichtstrom von mindestens 20 lm bis 150 lm aussenden. Je nach Anwendung kann die Hochleistungsleuchtdiode dabei eine Lambertsche, eine Batwing-, oder eine Seiten-Abstrahlcharakteristik aufweisen. Dies ermöglicht die Kombination von mehreren Signalen mit einem einzigen Fensterelement, was besonders für Befeuerungseinheiten zur Signalabgabe mit einem geringen Formfaktor vorteilhaft ist.

Vorzugsweise sind dabei die Leuchtdioden auf einer Leiterplatine angeordnet und entsprechend dem abzugebenden Signal zur Erzeugung von Licht im sichtbaren Wellenlängenbereich, insbesondere von blauem, grünem, gelbem, orangem, rotem oder weißem Licht, oder von Licht im infraroten Wellenlängenbereich ausgebildet. Die weiße Farbe kann dabei durch Phosphorinversion und/oder durch RGB-Mischtechnik erzeugt werden. Es können auch großflächige abstrahlende Leuchtdioden verwendet werden. Durch Infrarotabstrahlung können Luftfahrzeuge, die mit Infrarotsensoren ausgestattet sind, das von den Befeuerungseinheiten emittierte Infrarotlicht erkennen, wie dies bei Halogenglühlampen bereits der Fall ist.

In einer weiteren vorteilhaften Ausgestaltung der erfindungsgemäßen Befeuerungseinheit sind die Leuchtdioden auf einer Leiterplatine angeordnet, die ein optisches Element zur Strahlbeeinflussung aufweist. Die mit den Leuchtdioden verbundenen optischen Elemente können mit Vorteil bereits herstellerseitig aufeinander ausgerichtet werden.

In einer weiteren bevorzugten Ausführungsform der erfindungsgemäßen Befeuerungseinheit weist das Fensterelement und/oder die Leiterplatine optische Elemente zur Strahlbeeinflussung für jedes abzugebende Signal auf. Je nach Signal können optische Elemente einen Lichtstrahl stark bündeln, während andere optische Elemente etwa desselben Fensterelements einen Lichtstrahl breit auffächern.

In einer weiteren bevorzugten Ausgestaltung der erfindungsgemäßen Befeuerungseinheit ist in das Kassettenmodul eine elektrische Versorgungsleitung zur Verbindung der elektrischen Komponenten mit einer externen elektrischen Energiequelle gasdicht eingeführt. Bei der elektrischen Energiequelle kann es sich um eine Konstantstrom- oder auch eine Konstantspannungsquelle handeln.

In einer anderen vorteilhaften Ausführungsform der erfindungsgemäßen Befeuerungseinheit ist das Kassettenmodul mit einem inerten Gas befüllt. Hierdurch kann eine trockene Atmosphäre innerhalb des Kassettenmoduls geschaffen werden, die kondensationsbedingte Ausfälle der elektrischen oder optischen Komponenten verhindert.

In einer anderen bevorzugten Ausgestaltung der erfindungsgemäßen Befeuerungseinheit ist in das Kassettenmoduls ein Trocknungsmittel eingebracht ist. Auch hierdurch wird Restfeuchtigkeit gebunden, die ansonsten kondensieren könnte, insbesondere bei Verwendung von kaum Abwärme produzierenden Leuchtdioden. Kondensierter Wasserdampf könnte sich als Streuschicht auf optische Komponenten legen, die den Lichtaustritt verringert.

Weitere Eigenschaften und Vorteile der erfindungsgemäßen Befeuerungseinheit ergeben sich aus nachfolgender Beschreibung eines in den Zeichnungen dargestellten Ausführungsbeispiels, in deren FIG 1 ein Querschnitt durch ein gasdichtes Kassettenmodul, FIG 2 und FIG 3 Leiterplatinen mit Leuchtdioden einer erfindungsgemäßen Befeuerungseinheit, FIG 4 eine explodierte Darstellung eines erfindungsgemäßen Unterflurfeuers schematisch veranschaulicht sind.

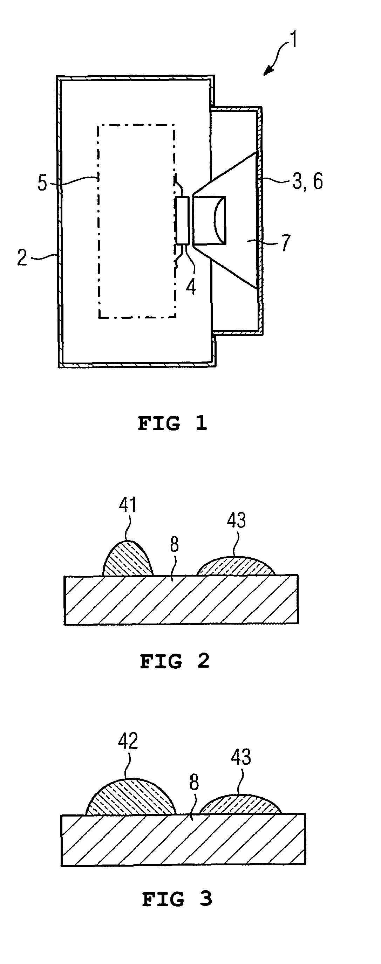

Gemäß FIG 1 weist ein gasdichtes Kassettenmodul 1, welches zur Integration in eine erfindungsgemäße, im Ganzen nicht dargestellte Befeuerungseinheit vorgesehen ist, ein Modulgehäuse 2 und einen Moduldeckel 3 auf. Im Modulgehäuse 2 sind eine durch Leuchtdioden 4 gebildete Lichtquelle und elektrische Komponenten 5 angeordnet, die nicht näher dargestellte elektrische Leitungen und eine Treiberschaltung zur Ansteuerung der Leuchtdioden 4 umfassen. Das Modulgehäuse 2 ist aus einem thermisch hochleitfähigen Material gefertigt, um die von den elektrischen Komponenten 5 im Betrieb erzeugte Wärme an die Umgebung abzuführen. Der Moduldeckel 3 ist einstückig aus optisch transparentem Polycarbonat gefertigt und weist ein für Licht durchlässiges Fensterelement 6 auf. Am Fensterelement 6 sind optische Elemente 7 angeformt, die zur Beeinflussung von Strahlform und/oder Strahlrichtung des von den Leuchtdioden 4 erzeugten Lichts ausgebildet sind. Die optischen Elemente 7 sind im Einzelnen nicht dargestellt und können Einrichtungen zum Bündeln, Streuen, Ablenken, Reflektieren und dergleichen von Licht aufweisen.

Der Moduldeckel 3 wird zur Herstellung eines gasdichten Kassettenmoduls 1 mit dem Modulgehäuse 2 verklebt. Dabei wird der Moduldeckel 3 und das Modulgehäuse 2 mittels Klebstoff, beispielsweise mittels UV-härtendem Klebstoff oder Silikongummi, zusammengefügt, wobei die Leuchtdioden 4 relativ zu den optischen Elementen 7 aktiv positioniert und ausgerichtet werden. Unter Haltung der Position und Ausrichtung wird der Klebstoff ausgehärtet. Die Position und Ausrichtung richten sich dabei an der optischen Achse der Leuchtdioden 4, um eine optimale Intensitätsverteilung des abgestrahlten Lichts zu erreichen. Diese ist durch eine maximale Spitzenintensität verbunden mit einer minimal möglichen Halbwertsbreite charakterisiert. Außerdem verursacht die optimale Intensitätsverteilung die geringsten optischen Verluste. Die Positionierung und Ausrichtung kann dabei durch eine aktive Einbauhilfe bewerkstelligt werden, mittels der alle Bewegungsfreiheitsgrade motorisch einstellbar sind.

Das Modulgehäuse 2 kann alternativ mit dem Moduldeckel 3 gasdicht verschlossen werden, z.B. mittels Einsetzung eines O-Rings.

Die Lichtquelle wird gemäß FIG 2 und FIG 3 durch eine mit Leuchtdioden 41 bis 43 bestückte Leiterplatine 8 gebildet. Dabei sind für jedes von der Befeuerungseinheit abzugebende Signal unterschiedliche Leuchtdioden 41 bis 43 vorgesehen. Vorzugsweise ist je Signal eine einzige Hochleistungsleuchtdiode vorgesehen. Erfordern die verschiedenen Signale, beispielsweise ein grünes Freigabe- und ein rotes Sperrsignal an einer Haltelinie auf einem Rollweg vor einer Pisteneinmündung, unterschiedliche Intensitätsverteilungen, so weist das Fensterelement 6 entsprechend der Signale unterschiedliche optische Elemente 7 auf. Optische Elemente 7 können auch auf der Leiterplatine 8 über den Leuchtdioden 41 bis 44 angeordnet sein. Die in FIG 2 und FIG 3 rechts dargestellten, beispielsweise rot abstrahlenden Leuchtdioden 43, weisen ein optisches Element mit großer Krümmung an der Lichtaustrittsfläche auf, die daher weniger streuen, während bei den jeweils links dargestellten, beispielsweise grün abstrahlenden Leuchtdioden 41 bzw. 42, die Leuchtdiode 41 aus FIG 2 eine kleinere Krümmung an der Lichtaustrittsfläche aufweist als die in FIG 3 dargestellte Leuchtdiode 42.

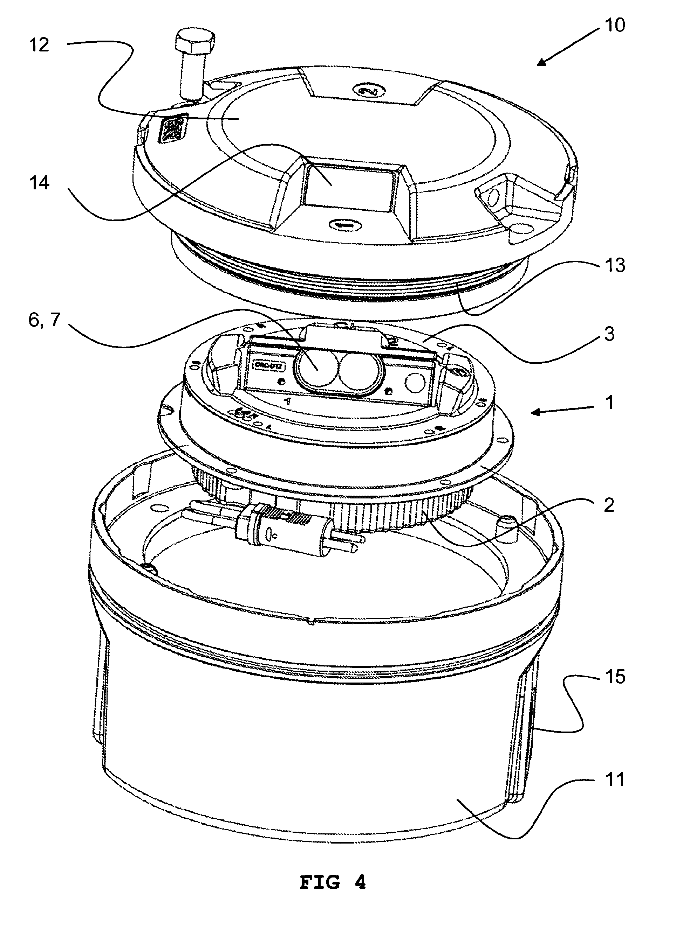

FIG 4 zeigt eine explodierte Darstellung einer erfindungsgemäßen Befeuerungseinheit 10. Das Kassettenmodul 1 ist in ein Außengehäuse untergebracht, das aus einer Einbauschale 11 oder einem Einbautopf und einem anpassenden Deckel gebildet ist, die beide im Allgemeinen aus Aluminium hergestellet werden.

Die in FIG 4 dargestellte Befeuerungseinheit ist ein Unterflurfeuer. Die Einbauschale 11 ist typisch im Boden mit einem Klebstoff in Beton oder Asphalt befestigt.

Die Öffnungen 15 zum Eintritt der Kabel in die Einbauschale 11 sind gasdicht veschlossen. Gasdichtung ist z.B. mit einer Gummidichtung 13 zwischen der Einbauschale 11 und dem Deckel 12 gesichert.

Das gasdicht verschlossene Kassettenmodul 1, das die Lichtquelle sowie die elektrischen Komponenten zur Versorgung und Ansteuerung der Lichtquelle und die optischen Komponenten 7 zur Beeinflussung des von der Lichtquelle erzeugten Lichts umfasst, passt in die Einbauschale 11 und unter den Deckel 12 an. Der Deckel 12 umfasst Lichtaustrittsöffnungen 14, durch welche das von den optischen Komponenten 7 des Kassettenmoduls 1 beeinflusste Licht austritt. Die Lichtaustrittsöffnungen 14 können aus einem Prisma oder anderen transparenten Element gebildet sein, das in eine Öffnung des Deckels 12 eingefügt und gasdicht verschlossen ist.

Vorteil der erfindungsgemäßen Befeuerungseinheiten ist, dass wenn das Prisma 14 gebrochen ist, z.B. wenn es durch einen vom Luftstrom der Flugzeugtriebwerke geschleuderten Kieselstein beschädigt wird, bleibt das Kassettenmodul 1 intakt, so dass die Lichtquelle, sowie die optischen und elektrischen Komponenten, von Wettereinflüssen wie Feuchtigkeit geschützt bleibt.

## Patentansprüche

1. Befeuerungseinheit zur Flugfeldbefeuerung auf einem Flugplatz, insbesondere zur Signalabgabe an ein Luftfahrzeug, mit einer Lichtquelle zur Erzeugung von abzustrahlendem Licht und die wenigstens eine Leuchtdiode (4) aufweist, elektrischen Komponenten (5) zur Versorgung und Ansteuerung der Lichtquelle, optischen Komponenten (7) zur Beeinflussung des von der Lichtquelle erzeugten Lichts, und einem Außengehäuse (11, 12) zur Aufnahme der Lichtquelle sowie der elektrischen (5) und optischen Komponenten, welches eine Lichtaustrittsöffnung (14) aufweist, durch welche von den optischen Komponenten (7) beeinflusstes Licht austritt, wobei die Befeuerungseinheit ein gasdicht verschlossenes Kassettenmodul (1) umfasst, in welchem die Lichtquelle mit den optischen Komponenten (7) angeordnet ist,
**dadurch gekennzeichnet,**
- **dass** die elektrischen (5) Komponenten (7) ebenso im gasdicht verschlossenen Kassettenmodul (1) angeordnet sind,
- **dass** das Kassettenmodul (1) eine Ausnehmung aufweist, in die ein transparentes Fensterelement (6) zur Abstrahlung von Licht gasdicht eingesetzt ist, welches ein optisches Element (7) zur Beeinflussung von Strahlform und/oder Abstrahlrichtung des austretenden Lichtstrahls aufweist, und wobei die Leuchtdiode (4) und das optische Element (7) zur Erzeugung einer geforderten Intensitätsverteilung des abgestrahlten Lichts zueinander positioniert und aufeinander ausgerichtet fixiert sind, und
- **dass** das Kassettenmodul (1) im Außengehäuse (11, 12) integriert ist, wobei das Außengehäuse ebenfalls gasdicht verschlossen ist, so dass die im Kassettenmodul angeordneten Komponenten doppelten Dichtigkeitsschutz genießen.

2. Befeuerungseinheit nach Anspruch 1, wobei die Lichtaustrittsöffnung (14) des Außengehäuses (11, 12) einen Fensterbaustein aufweist, der sich vom Fensterelement (6) des Kassettenmoduls unterscheidet.

3. Befeuerungseinheit nach Anspruch 1 oder 2, wobei das Kassettenmodul (1) ein die elektrischen Komponenten aufnehmendes Modulgehäuse (2) und einen das Modulgehäuse (2) verschließenden Moduldeckel (3) aufweist, welcher die Ausnehmung mit dem gasdicht eingesetzten Fensterelement (6) umfasst.

4. Befeuerungseinheit nach einem der Ansprüche 1 bis 3, wobei Markierungen und/oder mechanische Einbauhilfen vorgesehen sind, anhand der die Leuchtdioden (4) und das Fensterelement (6) mit dem optischen Element (7) zueinander positionierbar und aufeinander ausrichtbar fixierbar sind.

5. Befeuerungseinheit nach einem der Ansprüche 1 bis 4, wobei das Modulgehäuse (2) und/oder der Moduldeckel (3) und/oder eine äußere Hülle des Kassettenmoduls (1) thermisch hochleitfähig ausgebildet sind.

6. Befeuerungseinheit nach einem der Ansprüche 1 bis 5, wobei das Fensterelement (6) und der Moduldeckel (3) des Kassettenmoduls (1) einstückig und transparent ausgebildet sind.

7. Befeuerungseinheit nach einem der Ansprüche 1 bis 6, wobei die Lichtquelle zur Erzeugung von Licht für unterschiedliche Signale ausgebildet ist, wobei jedem Signal wenige oder nur eine einzige Leuchtdiode (4) zugeordnet sind bzw. ist.

8. Befeuerungseinheit nach Anspruch 7, wobei die Leuchtdioden (4) auf einer Leiterplatine (8) angeordnet und entsprechend dem abzugebenden Signal zur Erzeugung von Licht im sichtbaren Wellenlängenbereich, insbesondere blaues, grünes, gelbes, oranges, rotes oder weißes Licht, oder von Licht im infraroten Wellenlängenbereich ausgebildet sind.

9. Befeuerungseinheit nach einem der Ansprüche 1 bis 8, wobei die Leuchtdioden (4) auf einer Leiterplatine (8) angeordnet sind, die ein optisches Element (7) zur Strahlbeeinflussung aufweist.

10. Befeuerungseinheit nach einem der Ansprüche 1 bis 9, wobei das Fensterelement (6) und/oder die Leiterplatine (8) optische Elemente (7) zur Strahlbeeinflussung für jedes abzugebende Signal aufweist.

11. Befeuerungseinheit nach einem der Ansprüche 1 bis 10, wobei in das Kassettenmodul (1) eine elektrische Versorgungsleitung zur Verbindung der elektrischen Komponenten (5) mit einer externen elektrischen Energiequelle gasdicht eingeführt ist.

12. Befeuerungseinheit nach einem der Ansprüche 1 bis 11, wobei das Kassettenmodul (1) mit einem inerten Gas befüllt ist.

13. Befeuerungseinheit nach einem der Ansprüche 1 bis 12, wobei in das Kassettenmoduls (1) ein Trocknungsmittel eingebracht ist.

14. Befeuerungseinheit nach einem der Ansprüche 1 bis 13, die als Unterflurfeuer ausgebildet ist.

## Claims

1. A lighting unit for lighting airfields at an airport, in particular for signaling an aircraft, comprising a light source for generating light to be radiated and having at least one light emitting diode (4), electrical components (5) for supplying and steering the light source, optical components (7) for affecting the light generated by the light source, and an outer housing (11, 12) for receiving the light source as well as the electrical (5) and optical components, the outer housing having a light exit opening (14) through which light affected by the optical components (7) will exit, wherein the lighting unit comprises a gastightly closed cassette module (1), in which the light source is arranged together with the optical components (7), **characterized in that**
- the electrical (5) components (7) are equally arranged inside the gastightly closed cassette module (1),
- the cassette module (1) has an opening into which a transparent window element (6) for radiating light is gastightly inserted, which has an optical element (7) for affecting the beam shape and/or radiation direction of the exiting light beam, and wherein the light emitting diode (4) and the optical element (7) are positioned with respect to each other and secured in mutual alignment for generating a required intensity distribution of the radiated light, and
- the cassette module (1) is integrated into the outer housing (11, 12), wherein the outer housing is also gastightly closed, so that the components arranged inside the cassette module benefit from double tightness protection.

2. The lighting unit according to claim 1, wherein the light exit opening (14) of the outer housing (11, 12) has a window module which is distinct from the window element (6) of the cassette module.

3. The lighting unit according to claim 1 or 2, wherein the cassette module (1) has a module housing (2) receiving the electrical components and a module lid (3) closing the module housing (2) and comprising the opening with the gastightly inserted window element (6).

4. The lighting unit according to any of claims 1 to 3, wherein markings and/or mechanical mounting aids are provided, by means of which the light emitting diodes (4) and the window element (6) with the optical element (7) can be secured so that they can be positioned with respect to each other and mutually aligned.

5. The lighting unit according to any of claims 1 to 4, wherein the module housing (2) and/or the module lid (3) and/or an external shell of the cassette module (1) are formed to have high thermal conductivity.

6. The lighting unit according to any of claims 1 to 5, wherein the window element (6) and the module lid (3) of the cassette module (1) are formed to be one-piece and transparent.

7. The lighting unit according to any of claims 1 to 6, wherein the light source is made for generating light for various signals, wherein few or just one light emitting diode(s) (4) are/is associated with each signal.

8. The lighting unit according to claim 7, wherein the light emitting diodes (4) are arranged on a circuit board (8) and are formed for generating light in the visible spectrum, in particular blue, green, yellow, orange, red, or white light, or light in the infrared spectrum according to the signal to be emitted.

9. The lighting unit according to any of claims 1 to 8, wherein the light emitting diodes (4) are arranged on a circuit board (8) having an optical element (7) for affecting the beam.

10. The lighting unit according to any of claims 1 to 9, wherein the window element (6) and/or the circuit board (8) has/have optical elements (7) for affecting the beam for each signal to be output.

11. The lighting unit according to any of claims 1 to 10, wherein a power supply line for connecting the electrical components (5) to an external power source is introduced into the cassette module (1) in a gastight manner.

12. The lighting unit according to any of claims 1 to 11, wherein the cassette module (1) is filled with an inert gas.

13. The lighting unit according to any of claims 1 to 12, wherein a desiccant is introduced into the cassette module (1).

14. The lighting unit according to any of claims 1 to 13, formed as flush-mounted inset light.

## Revendications

1. Unité de balisage destinée à baliser un terrain d'aviation dans un aéroport, en particulier à transmettre des signaux à un aéronef, comprenant une source lumineuse destinée à produire une lumière à diffuser et qui présente au moins une diode électroluminescente (4), des composants électriques (5) destinés à alimenter et à commander la source lumineuse, des composants optiques (7) destinés à influencer la lumière produite par la source lumineuse, et un logement extérieur (11, 12) destiné à recevoir la source lumineuse ainsi que les composants électriques (5) et optiques qui présente une ouverture de sortie de lumière (14) au travers de laquelle sort une lumière influencée par les composants optiques (7), l'unité de balisage comprenant un module de cassette (1) fermé de façon étanche aux gaz dans lequel la source lumineuse est agencée avec les composants optiques (7), **caractérisée**
- **en ce que** les composants (7) électriques (5) sont également agencés dans le module de cassette (1) fermé de façon étanche aux gaz,
- **en ce que** le module de cassette (1) présente un évidement dans lequel un élément de fenêtre transparent (6) est inséré de façon étanche aux gaz afin de diffuser la lumière, lequel présente un élément optique (7) destiné à influencer la forme de rayonnement et/ou la direction du faisceau du rayon de lumière sortant, la diode électroluminescente (4) et l'élément optique (7) étant positionnés l'un par rapport à l'autre et fixés de façon orientée l'un vers l'autre de façon à produire une répartition d'intensité souhaitée de la lumière diffusée, et
- **en ce que** le module de cassette (1) est intégré dans le logement extérieur (11, 12), le logement extérieur étant également fermé de façon étanche aux gaz, de sorte que les composants agencés dans le module de cassette bénéficient d'une double protection d'étanchéité.

2. Unité de balisage selon la revendication 1, dans laquelle l'ouverture de sortie de lumière (14) du logement extérieur (11, 12) présente un composant de fenêtre qui se distingue de l'élément de fenêtre (6) du module de cassette.

3. Unité de balisage selon la revendication 1 ou 2, dans laquelle le module de cassette (1) présente un logement de module (2) recevant les composants électriques et un couvercle de module (3) fermant le logement de module (2) qui comprend l'évidement avec l'élément de fenêtre (6) inséré de façon étanche aux gaz.

4. Unité de balisage selon l'une des revendications 1 à 3, dans laquelle il est prévu des marquages et/ou des aides au montage mécaniques au moyen desquels les diodes électroluminescentes (4) et l'élément de fenêtre (6) peuvent être fixés à l'élément optique (7) de façon à pouvoir être positionnés l'un par rapport à l'autre et orientés l'un vers l'autre.

5. Unité de balisage selon l'une des revendications 1 à 4, dans laquelle le logement de module (2) et/ou le couvercle de module (3) et/ou une coque extérieure du module de cassette (1) sont réalisés de façon fortement conductrice thermiquement.

6. Unité de balisage selon l'une des revendications 1 à 5, dans laquelle l'élément de fenêtre (6) et le couvercle de module (3) du module de cassette (1) sont réalisés d'une seule pièce et de façon transparente.

7. Unité de balisage selon l'une des revendications 1 à 6, dans laquelle la source lumineuse est conçue de façon à produire de la lumière pour différents signaux, une seule diode électroluminescente (4) ou un petit nombre de diodes électroluminescentes (4) étant affectée(s) à chaque signal.

8. Unité de balisage selon la revendication 7, dans laquelle les diodes électroluminescentes (4) sont agencées sur un cadre de montage (8) et sont conçues de façon à produire une lumière dans une zone de longueur d'onde visible, en particulier une lumière bleue, verte, jaune, orange, rouge ou blanche, ou une lumière dans une zone de longueur d'onde infrarouge en fonction du signal devant être émis.

9. Unité de balisage selon l'une des revendications 1 à 8, dans laquelle les diodes électroluminescentes (4) sont agencées sur un cadre de montage (8) qui présente un élément optique (7) destiné à influencer le rayonnement.

10. Unité de balisage selon l'une des revendications 1 à 9, dans laquelle l'élément de fenêtre (6) et/ou le cadre de montage (8) présente des éléments optiques (7) destinés à influencer le rayonnement pour chaque signal devant être émis.

11. Unité de balisage selon l'une des revendications 1 à 10, dans laquelle une conduite d'alimentation électrique est insérée de façon étanche aux gaz dans le module de cassette (1) de façon à relier les composants électriques (5) avec une source d'énergie électrique externe.

12. Unité de balisage selon l'une des revendications 1 à 11, dans laquelle le module de cassette (1) est rempli d'un gaz inerte.

13. Unité de balisage selon l'une des revendications 1 à 12, dans laquelle un agent desséchant est placé dans le module de cassette (1).

14. Unité de balisage selon l'une des revendications 1 à 13, qui est conçue comme feu encastré.
